# EUROPÄISCHE PATENTSCHRIFT

(11) **EP 2 729 281 B1**
(45) Veröffentlichungstag und Bekanntmachung des Hinweises auf die Patenterteilung: **10.05.2017**
(21) Anmeldenummer: 12740517.3
(22) Anmeldetag: 04.07.2012
(51) Int. Cl.: B25J 15/00, B25J 9/16

(54) **ARBEITSVORRICHTUNG UND VERFAHREN**
WORKING DEVICE AND METHOD
DISPOSITIF DE TRAVAIL ET PROCÉDÉ

(30) Priorität: 08.07.2011 DE 202011103223 U
(43) Veröffentlichungstag der Anmeldung: 14.05.2014
(73) Patentinhaber: KUKA Systems GmbH, 86165 Augsburg (DE)
(72) Erfinder: MAISCHBERGER, Johann, 86424 Dinkelscherben (DE); NEIDER, Reinhold, 86462 Langweid (DE); HOENE, Albrecht, 93138 Lappersdorf (DE)
(74) Vertreter: Ernicke, Klaus Stefan
(86) Internationale Anmeldenummer: PCT/EP2012/062972
(87) Internationale Veröffentlichungsnummer: WO 2013/007565

(56) Entgegenhaltungen:
- DE-A1- 10 354 079
- DE-A1-102008 018 848
- JP-A- 7 214 435
- JP-A- 8 011 083
- JP-A- 2000 108 064

## Beschreibung

Die Erfindung betrifft eine Arbeitsvorrichtung gemäß dem Oberbegriff des Anspruchs 1 und ein Verfahren zum Drehfügen und/oder Drehlösen gemäß dem Oberbegriff des Anspruchs 14. Eine solche Vorrichtung und ein solches Verfahren sind zum Beispiel aus der DE-A-103 54 079 bekannt, die einen Schraubroboter zeigt, der aus einem konventionellen Gelenkarmroboter besteht, der an seinem Endglied, z.B. einer mehrachsig beweglichen Roboterhand, eine Schraubvorrichtung trägt, die den gesamten Schraubprozess durchführt. Dabei führt der Roboter nur Handhabungsaufgaben aus und positioniert die Schraubvorrichtung. Am Schraubprozess hat er keinen eigenen Anteil. Der Roboter und die Schraubvorrichtung haben eigene Antriebe und eigene Steuerungen. Außerdem ist noch eine Anlagensteuerung mit einem Ablaufprogramm vorhanden.

Es ist Aufgabe der vorliegenden Erfindung, eine bessere Arbeitsvorrichtung und ein Verfahren zum Drehfügen und/oder Drehlösen aufzuzeigen, die insbesondere einen geringeren Bau- und Einrichtungsaufwand erfordern und eine höhere Flexibilität aufweisen. Die Erfindung löst diese Aufgabe mit einer Arbeitsvorrichtung gemäß Anspruch 1 und einem Verfahren gemäß Anspruch 14. Bei der beanspruchten Arbeitsvorrichtung, insbesondere Schraubvorrichtung, und dem Verfahren ist der Roboter am Drehfüge- oder Drehlöseprozess selbst beteiligt. Der genannte Prozess kann z.B. ein Schraubprozess sein. Der Roboter hat hierbei mehrere Funktionen. Zum einen trägt, handhabt und positioniert er eine Dreheinrichtung, die zum Andrehen oder Ausdrehen einer Schraube oder eines anderen Drehteils dient. Zum anderen führt er das Festdrehen oder Losdrehen des Drehteils durch eine eigene Drehbewegung durch. Die vom Roboter mitgeführte Dreheinrichtung kann eine reduzierte Funktion haben und nur zum schnellen Andrehen oder Ausdrehen dienen. Sie lässt sich zum anschließenden Festdrehen oder zum vorherigen Losdrehen in ihrer Drehbeweglichkeit blockieren. Hierdurch wird die Dreheinrichtung versteift und die Drehbewegung des Roboters zum Festdrehen oder Drehlösen auf die Schraube oder dgl. übertragen.

Die Arbeitsvorrichtung kann eine geeignete und ggf. mehrteilige Sensorik haben, um den Drehfüge- und/oder Drehlöseprozess durchzuführen und um für die Prozessschritte maßgebliche Ereignisse zu detektieren, die ggf. dokumentiert werden können. Sie kann auch Belastungen, z.B. das am Drehteil entstehende oder aufzubringende Festdrehmoment oder Anzugsmoment oder ein Losdreh- oder Losbrechmoment und dessen Abfall, sowie Drehbewegungen und Drehpositionen detektieren. Über eine Drehungs- oder Positionserfassung kann eine Plausibilitätskontrolle bei einer Belastungserfassung erfolgen. Vorteilhafterweise kann beim Roboter bereits vorhandene, insbesondere integrierte, Sensorik eingesetzt werden, die ggf. durch Redundanz besonders sicher ist. Der Drehfüge- oder Drehlöseprozess kann mit der Sensorik und der hierüber gesteuerten Mechanik besonders sicher und präzise durchgeführt werden, wobei auch eine Überwachung, Protokollierung und Qualitätssicherung möglich ist.

Bei der beanspruchten Arbeitsvorrichtung kann der Bau- und Steuerungsaufwand gegenüber dem Stand der Technik wesentlich vermindert werden. Für den Drehfüge- oder Drehlöseprozess können ohnehin vorhandene Teile und Funktionalitäten des Roboters eingesetzt werden. Die Steuerung des gesamten Prozesses kann über eine vorhandene Robotersteuerung erfolgen, wobei z.B. die Dreheinrichtung als zusätzliche Achse(n) eingebunden werden kann.

Durch die Funktionsaufteilung können der Roboter und das Drehteil mit ihren Ausbildungen und Funktionen optimal genutzt und an die Prozesserfordernisse angepasst werden, was für die Leistungsfähigkeit und die Wirtschaftlichkeit der Arbeitsvorrichtung besonders günstig ist. Insbesondere können beim Roboter bereits vorhandene Teile und Funktionen verwendet und die Dreheinrichtung entsprechend vereinfacht werden.

Die Dreheinrichtung kann gegenüber den vorbekannten Schraubvorrichtungen in ihrem Bauaufwand und ihrer Funktionalität sowie auch in ihrem Gewicht reduziert werden. Die beanspruchte Arbeitsvorrichtung ermöglicht ferner den Einsatz von leichtgewichtigen und mobilen Robotern. Die Arbeitsvorrichtung ist daher ihrerseits mobil und kann an beliebigen Stellen eingesetzt werden. Sie kann auch schnell den Einsatzort wechseln und installiert werden. Der Einrichtaufwand ist dabei gering.

Günstig ist außerdem die Verwendung eines Roboters mit mindestens einer nachgiebigen Achse. Dies mindert die Unfallgefahr und reduziert den bisher erforderlichen Sicherheitsaufwand. Außerdem lässt sich ein solcher Roboter schneller und einfacher teachen und programmieren. Er kann etwaige Lage- oder Teiletoleranzen an Werkstück und/oder Drehteil selbsttätig kompensieren, was die Genauigkeit und den Aufwand bei der Roboterprogrammierung mindert.

Die beanspruchte Arbeitsvorrichtung hat eine hohe Leistungsfähigkeit. Das Andrehen oder Ausdrehen einer Schraube oder dgl. kann von der entsprechend ausgelegten Dreheinrichtung mit hoher Geschwindigkeit und in sehr kurzer Zeit durchgeführt werden, wobei kein hohes Moment erforderlich ist. Für das Festdrehen oder Losdrehen genügt ein begrenzter Drehwinkel, wobei die zum Festdrehen erforderliche höhere Kraft bzw. das Moment vom Roboter aufgebracht wird. Die Dreheinrichtung kann entsprechend entlastet und in ihrer Präzision vereinfacht werden. Insgesamt kann der Drehfüge- oder Drehlöseprozess schnell, sicher und mit hoher Präzision durchgeführt werden.

Die Arbeitsvorrichtung kann eine Halteeinrichtung aufweisen, mit der ein Drehteil aufgenommen und für die Zuführung zur Fügestelle, zum dortigen Positionieren und zum Andrehen gehalten werden kann. Die Arbeitsvorrichtung kann dadurch autark arbeiten und den gesamten Drehfügeprozess einschließlich Aufnahme, Zuführung und Positionierung eines Drehteils durchführen.

Ein Roboter mit mindestens einer nachgiebigen Achse ist zum sicheren Führen und Positionieren der Dreheinrichtung mit dem Drehteil vor und während des Drehfüge- oder Drehlöseprozesses besonders gut geeignet. Vorteile ergeben sich insbesondere beim Nachführen des Drehteils beim axialen Drehvorschub und auch bei seiner Seitenführung quer zur Drehfügeachse. Der Roboter kann auch eine definierte Normalkraft in Axialrichtung der Drehfügeachse aufbringen. Die Energieversorgung der Dreheinrichtung und die Kommunikationsleitungen können durch die Hohlwellen des Roboters geführt sein. Hierdurch ist die Beeinflussung von Messergebnissen der Sensorik, insbesondere der gemessenen Drehmomente, geringer als bei einer externen Verkabelung.

Die Arbeitsvorrichtung kann in unterschiedlichsten technischen Bereichen eingesetzt werden, z.B. bei Montageaufgaben an Haushalts- oder Büromaschinen. Sie kann insbesondere Schrauben in Gewindebohrungen eindrehen und festziehen oder lösen und ausdrehen. Sie kann umgekehrt auch Muttern auf Schraubbolzen ansetzen und anziehen bzw. lösen. Sie kann auch andere Drehfügeverbindungen, z.B. Bajonettverbindungen oder dgl. setzen.

Bei einem bevorzugten Ausführungsbeispiel weist die Arbeitsvorrichtung eine Sensorik auf, die eine Drehung des Endglieds, insbesondere seines Abtriebselements, erfasst.

Bei einem bevorzugten Ausführungsbeispiel weist die Arbeitsvorrichtung eine Sensorik auf, die eine Drehung der Dreheinrichtung erfasst.

Bei einem bevorzugten Ausführungsbeispiel weist die Arbeitsvorrichtung eine Sensorik auf, die ein Festdrehmoment und/oder ein Losbrechmoment erfasst

Bei einem bevorzugten Ausführungsbeispiel weist die Arbeitsvorrichtung eine Sensorik auf, die ein Andrehmoment und/oder ein Ausdrehmoment erfasst.

Bei einem bevorzugten Ausführungsbeispiel weist die Sensorik der Arbeitsvorrichtung einen oder mehrere Sensoren zur Erfassung von Drehmomenten und/oder Drehwinkeln auf, die am Endglied, insbesondere an dessen Abtriebselement, angeordnet sind.

Bei einem bevorzugten Ausführungsbeispiel weist die Sensorik der Arbeitsvorrichtung mindestens einen Sensor zur Erfassung von Drehmomenten und/oder Drehwinkeln auf, der an der Dreheinrichtung angeordnet ist.

Bei einem bevorzugten Ausführungsbeispiel ist die Sensorik der Arbeitsvorrichtung zumindest teilweise redundant ausgebildet.

Bei einem bevorzugten Ausführungsbeispiel weist die Dreheinrichtung ein fest oder lösbar angeordnetes Drehwerkzeug auf.

Bei einem bevorzugten Ausführungsbeispiel weist die Dreheinrichtung einen steuerbaren Drehantrieb, insbesondere einen steuerbaren Elektromotor mit einem Getriebe, auf.

Bei einem bevorzugten Ausführungsbeispiel weist die Dreheinrichtung eine mit dem Drehantrieb verbundene Werkzeugaufnahme auf.

Bei einem bevorzugten Ausführungsbeispiel weist das Abtriebselement einen steuerbaren Drehantrieb, insbesondere einen steuerbaren Elektromotor mit einem Getriebe, auf.

Bei einem bevorzugten Ausführungsbeispiel weist das Abtriebselement eine steuerbare Bremse auf

Bei einem bevorzugten Ausführungsbeispiel weist der Roboter mehrere gelenkig miteinander verbundene Glieder mit gesteuert angetriebenen Achsen (I - VII), insbesondere Drehachsen, aufweist.

Bei einem bevorzugten Ausführungsbeispiel weist ein mindestens dreigliedriger Roboter ein Endglied, ein Basisglied und mindestens ein Zwischenglied auf.

Bei einem bevorzugten Ausführungsbeispiel weist der Roboter einen oder mehrere Sensoren zur Erfassung der Belastung von mindesten einem seiner Glieder, insbesondere zur Erfassung der einwirkenden Kräfte und/oder Momente, auf.

Bei einem bevorzugten Ausführungsbeispiel weist der programmierbare Roboter nur eine Positionssteuerung für seine Achse(n) (I - VII) auf.

Bei einem bevorzugten Ausführungsbeispiel ist der Roboter mobil ausgebildet.

Bei einem weiteren bevorzugten Ausführungsbeispiel ist die Dreheinrichtung mittels einer vom Roboter steuerbaren Kupplung in ihrer Drehbeweglichkeit blockierbar, um die Drehbewegung und ein Festdreh- oder Losdrehmoment des Roboters auf das Drehteil zu übertragen. Die Kupplung ist zwischen dem Abtriebselement des Roboters und dem Drehwerkzeug ausgebildet und kann das Abtriebselement direkt zur Bewegungs- und Momentenübertragung mit dem Abtriebselement oder Endglied des Roboters verbinden. Die mechanische Kupplung kann insbesondere durch eine Zustellbewegung des Roboters geschlossen und geöffnet werden, wodurch separate Antriebs- und Steuermittel entbehrlich sind. Außerdem kann der Roboter durch wiederholtes Schliessen und Öffnen sowie zwischenzeitliches Rückdrehen das Drehwerkzeug in der Art einer Ratsche drehen. Dies ist vorteilhaft, falls der Roboter und insbesondere sein Abtriebsglied begrenzte Drehwinkel haben und zum Festdrehen oder Losdrehen ein grösserer Drehwinkel erforderlich ist.

Bei dieser Variante der Dreheinrichtung kann auf eine Sensorik an der Dreheinrichtung verzichtet werden. Drehbewegungen der eigenständig angetriebenen Dreheinrichtung beim Andrehen oder Ausdrehen können über die Reaktionskräfte und -momente an der Verbindungsstelle zum Roboter, insbesondere zum Abtriebselement, von der robotereigenen Sensorik detektiert werden. Alternativ kann der Drehantrieb der Dreheinrichtung über eine antriebseigene Sensorik, insbesondere über eine Motorstrommessung, die eigenen Drehbewegungen und Drehmomente erfassen. Hierfür genügt ebenfalls ein geringer Bau- und Steueraufwand.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: Eine Arbeitsvorrichtung mit Drehteil, Werkstück und Bereitstellung in perspektivischer und explosionsartiger Ansicht,
- Figur 2:: einen Roboter mit einer Dreheinrichtung und schematischer Komponentendarstellung in Seitenansicht,
- Figur 3:: einen Leichtbauroboter mit nachgiebigen Achsen,
- Figur 4:: eine Variante einer Dreheinrichtung in Seitenansicht,
- Figur 5:: einen geklappten Längsschnitt durch die Dreheinrichtung von Figur 4 und
- Figur 6 und 7:: andere Ansichten der Dreheinrichtung von Figur 4 und 5.

Die Erfindung betrifft eine Arbeitsvorrichtung (1) zum Drehfügen und/oder Drehlösen von Drehteilen (3). Die Erfindung betrifft ferner ein Drehfüge- und Drehlöseverfahren und ein Verfahren zum Einsatz einer solchen Arbeitsvorrichtung (1).

Beim Drehfügen und/oder Drehlösen wird ein Drehteil (3) mit einer Drehaufnahme (4) verbunden. Hierbei kann eine Zusatzfunktion mit Einspannen, Befestigen oder dgl. eines anderen Teils einhergehen. Beim Drehfügen und/oder Drehlösen wird eine Relativbewegung zwischen Drehteil (3) und Drehaufnahme (4) durchgeführt, die zumindest eine Drehung und ggf. eine Linearbewegung, z.B. eine axiale Vorschub- oder Rückzugbewegung, umfasst. In den nachfolgend erläuterten Ausführungsbeispielen ist ein Drehfügeprozess gezeigt, der als Schraubprozess ausgebildet ist. Das Drehteil (3) ist hierbei ein Schraubteil. Es kann sich hierbei z.B. um die in den Zeichnungen dargestellte Schraube mit einem Schaft und einem Gewinde (5) sowie einem Schraubkopf handeln. Sie wird beispielhaft in eine Dreh- oder Schraubaufnahme (4), z.B. eine Gewindebohrung, in einem Werkstück (2) eingedreht. Die Schraubzuordnung kann auch umgekehrt sein, wobei das Drehteil (3) eine Mutter mit einem Innengewinde ist, die auf eine als Schraubbolzen ausgebildete Drehaufnahme (4) aufgeschraubt wird.

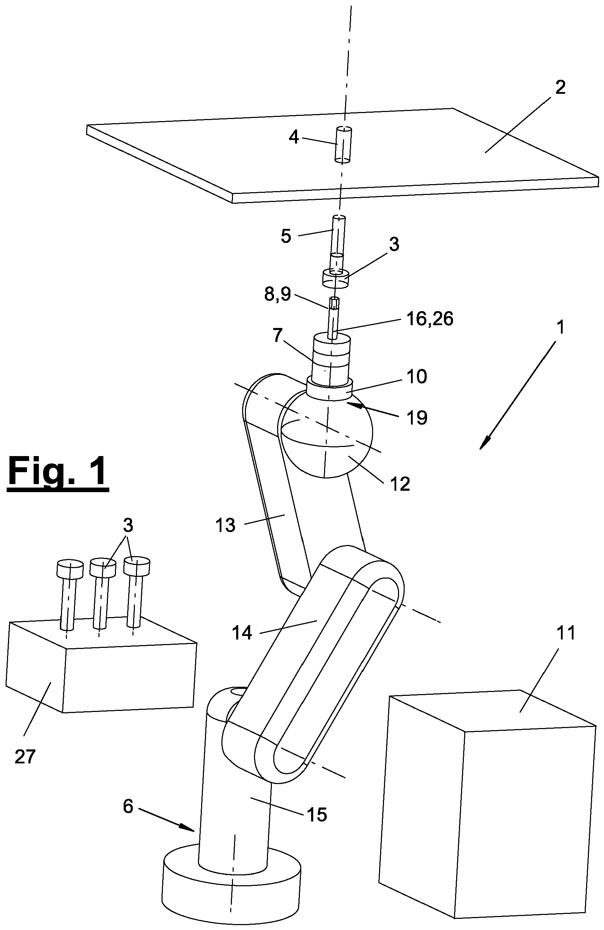

Das Werkstück (2) ist in Figur 1 schematisch angedeutet. Es kann von beliebiger Art, Größe und Ausbildung sein. Beispielhaft handelt es sich um ein Gehäuse eines Gerätes, z.B. einer Waschmaschine, an dem ein Deckel (nicht dargestellt) mittels Schrauben (3) befestigt wird. Daneben sind beliebige andere Ausgestaltungen des Werkstücks und Einsatzbereiche der Arbeitsvorrichtung (1) möglich.

Der Drehfügeprozess, z.B. Schraubprozess, kann in mehreren aufeinander folgenden Schritten durchgeführt werden. In einem ersten Schritt kann nach dem Positionieren ein Andrehen des Drehteils (3) erfolgen, wobei das Drehteil (3) eine oder bevorzugt mehrere volle Umdrehungen ausführt, wobei z.B. gleichzeitig eine Vorschubbewegung stattfindet. Beim Andrehen ist häufig wenig Kraft oder Moment erforderlich, wobei der Andrehweg und die Geschwindigkeit wichtiger sind. An das Andrehen schließt sich ein Festdrehen an, welches ein höheres Moment bei einem beschränkten Drehwinkel von z.B. weniger als 360° erfordert und mit dem z.B. die Sicherung einer Drehverbindung, insbesondere einer Schraubverbindung, durch Klemmung oder dgl. hergestellt wird. Das Festdrehen wird auch als Anziehen eines Drehteils, z.B. einer Schraube, bezeichnet. Hierbei stehen weniger die Geschwindigkeit als vielmehr das Moment sowie eine ggf. erforderliche Präzision hinsichtlich der Höhe und ggf. auch der Entwicklung des Festdrehmoments im Vordergrund.

Die Arbeitsvorrichtung (1) weist in der gezeigten Ausführungsform von Figur 1 einen mehrgliedrigen Roboter (6) und eine Dreheinrichtung (7) auf. Zur Arbeitsvorrichtung (1) kann ferner eine Bereitstellung (27) für ein oder mehrere Drehteile (3) gehören. Die Arbeitsvorrichtung (1) kann ferner eine Steuerung (11) aufweisen, die z.B. als Robotersteuerung ausgebildet ist. Die Steuerung (11) kann den Roboter (6) und die Dreheinrichtung (7) gemeinsam steuern. Alternativ sind getrennte Steuerungen, ggf. mit einer gegenseitigen Kopplung, möglich.

Der Roboter (6) und die Dreheinrichtung (7) sind gemeinsam am Drehfügeprozess beteiligt. Der Roboter (6) trägt die Dreheinrichtung (7), die ihrerseits über ein fest oder lösbar angeordnetes Drehwerkzeug (8) mit dem Drehteil (3) in drehschlüssigem Eingriff steht. Der Roboter (6) handhabt und führt die Dreheinrichtung (7), wobei über eine Roboterbewegung das Drehteil (3) an die Fügestelle, insbesondere die Drehaufnahme (4), zugeführt und dort positioniert wird. Das anschließende Andrehen des Drehteils (3), z.B. der Schraube, wird von der Dreheinrichtung (7) eigenständig durchgeführt. Das nachfolgende Festdrehen übernimmt der Roboter (6) und führt hierzu eine Drehbewegung aus. Der Roboter (6) hat hierfür ein Endglied (12) mit einem drehenden Abtriebselement (10), an dem die Dreheinrichtung (7) drehfest angeordnet ist.

Die Arbeitsvorrichtung (1) kann außerdem eine Halteeinrichtung (9) zum Aufnehmen und Halten eines losen Drehteils (3) aufweisen. Die Halteeinrichtung (9) kann z.B. am Drehwerkzeug (8) angeordnet sein. Sie kann z.B. zum Aufnehmen und sicheren Greifen eines Drehteils (3) an der Bereitstellung (27) genutzt werden.

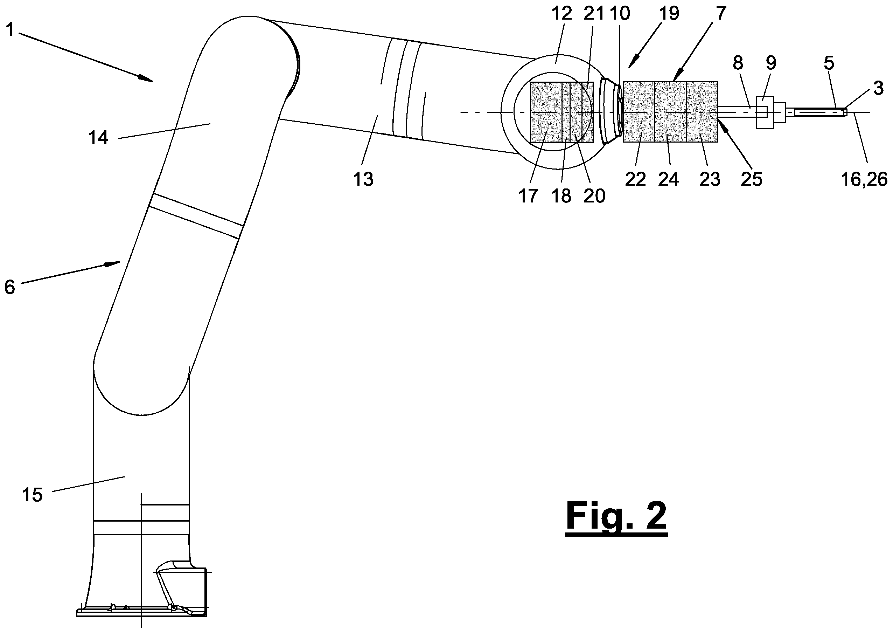

Die in Figur 1 und 2 schematisch dargestellte Dreheinrichtung (7) weist abtriebsseitig eine Drehachse (26) auf, die mit der Rotationsachse des Drehteils (3) und des Drehwerkzeugs (8) fluchtet. Die Dreheinrichtung (7) ist drehbeweglich ausgebildet und eigenständig angetrieben sowie steuerbar. Zum Festziehen des Drehteils (3) mittels der vom Roboter (6) ausgeführten Drehbewegung ist die Dreheinrichtung (7) in ihrer eigenen Drehbeweglichkeit blockierbar. Sie wird hierdurch versteift, so dass die Drehbewegung des Roboters (6) auf das Drehwerkzeug (8) vorzugsweise schlupffrei übertragen wird.

Figur 2 zeigt schematisch den konstruktiven Aufbau einer Dreheinrichtung (7), die auch als Andrehvorrichtung bezeichnet wird. Sie umfasst zum einen einen Drehantrieb (22), der steuerbar ist und vorzugsweise mit der Robotersteuerung (11) verbunden ist. Der Drehantrieb (22) besteht z.B. aus einem steuerbaren Elektromotor und ggf. einem zugeordneten Getriebe. Der Drehantrieb (22) ist z.B. auf hohe Geschwindigkeit bei niedrigem Moment ausgelegt. Die Geschwindigkeit kann gesteuert und an die Erfordernisse beim Andrehen oder Anschrauben angepasst werden.

Der Stator des Drehantriebs (22) ist mit dem Teller oder Flansch des Abtriebselements (10) drehfest verbunden. Die Verbindung kann lösbar sein, wobei ggf. eine automatische Wechselkupplung zwischengeschaltet ist. Der Rotor bzw. das Abtriebsteil ist z.B. als Motorspindel ausgebildet und ist mit dem Drehwerkzeug (8) verbunden.

Die Dreheinrichtung (7) weist ferner eine Blockiereinrichtung (23) auf. Dies kann z.B. eine Bremse für das Abtriebsteil des Drehantriebs (22) sein. Alternativ ist eine Riegeleinrichtung, Arretierung oder dgl. möglich. Die Blockiereinrichtung (23) kann ebenfalls steuerbar bzw. schaltbar sein und mit der Steuerung (11) verbunden sein.

Ferner weist die Dreheinrichtung (7) das fest oder lösbar angeordnete Drehwerkzeug (8) auf, welches in seiner Ausbildung und Anordnung an das jeweilige Drehteil (3) angepasst ist. Die Dreheinrichtung (7) kann z.B. eine Werkzeugaufnahme (25) zur lösbaren und austauschbaren Anordnung eines Drehwerkzeugs (8) aufweisen. Dies kann z.B. eine Steckfassung oder dgl. sein. Ein Drehwerkzeug (8) kann z.B. als Schraubklinge, Sechskantpin, Gabel- oder Ringschlüssel oder dgl. ausgebildet sein.

Die Haltevorrichtung (9) kann z.B. ein magnetisierter Endbereich des Drehwerkzeugs (8) sein, was für Drehteile aus Stahl oder anderen magnetisierbaren Werkstoffen von Vorteil ist. Alternativ oder zusätzlich kann die Halteeinrichtung (9) als steuerbarer Greifer, Sauger oder Spanner zum Fassen und Halten eines Drehteils (3), z.B. eines Schraubkopfes, ausgebildet sein.

Die Arbeitsvorrichtung (1) weist eine Sensorik (19) auf, die eine odere mehrere Funktionen haben kann und die ebenfalls mit der Steuerung (11) verbunden ist. Die Sensorik (19) kann z.B. ein Ende des Andrehvorgangs detektieren und an die Steuerung (11) melden, die daraufhin den Drehantrieb (22) abschaltet und die Blockiereinrichtung (23) einschaltet sowie den Roboter (6) zur Durchführung einer Drehbewegung zum Festdrehen des Drehteils (3) ansteuert. Das Ende des Andrehvorgangs kann auf unterschiedliche Weise detektiert werden, z.B. über eine Erhöhung des mechanischen Widerstands und des zum Drehen erforderlichen Moments, eine Weg- oder Positionsmessung, durch einen Anschlag oder einen Kontakt oder dgl..

Die Sensorik (19) kann ferner ein Festdrehmoment erfassen. Dies kann mit einem Vorgabewert verglichen werden, wobei die Drehbewegung des Roboters (6) entsprechend geregelt wird. Die Sensorik (19) kann ggf. auch ein Andrehmoment erfassen, um hierüber das Ende der Andrehbewegung zu detektieren oder ggf. auch die Andrehbewegung zu beeinflussen, insbesondere zu steuern.

Die Sensorik (19) kann ferner derart ausgebildet sein, dass sie Drehbewegungen und/oder Drehpositionen erfasst. Dies kann die Drehbewegung der Dreheinrichtung (7) und/oder des Roboters (6) betreffen. Die Bewegungs- oder Positionswerte können zur Funktionsüberwachung der Dreheinrichtung (7) und/oder des Roboters (6) hinsichtlich der tatsächlichen Ausführung von Drehbewegungen eingesetzt werden. Sie können außerdem der Plausibilitätskontrolle dienen und mit parallel erfassten Belastungen, insbesondere Momenten, in Bezug gesetzt werden. Hierüber lässt sich detektieren, ob eine Belastungserhöhung, insbesondere eine Momentenerhöhung, auf einer Drehbewegung beruht und das Ende der Andrehbewegung bzw. das tatsächliche Erreichen eines Festdrehmoments signalisiert oder ob eine Funktionsstörung vorliegt, z.B. ein Gewindeschaden.

Die Sensorik (19) kann zumindest teilweise redundant ausgebildet sein. Sie weist dabei z.B. zwei oder mehr gleichartige und gleichzeitig erfassende Sensoren auf, deren Ergebnisse verglichen und ausgewertet werden, um die Realitätstreue des sensierten physikalischen Effekts zu verifizieren.

Der mehrgliedrige Roboter (6) weist das erwähnte Endglied (12) auf, welches z.B. als Roboterhand ausgebildet ist. Das Endglied (12) seinerseits weist ein drehbares Abtriebselement (10) auf, welches z.B. als Abtriebsflansch ausgeführt ist und um eine Achse (16) dreht, die parallel zur Drehachse (26) des Drehantriebs (7) angeordnet ist und vorzugsweise mit dieser fluchtet. Die roboterseitige Drehachse (16) kann auch mit der Drehachse des Drehwerkzeugs (8) und des Drehteils (3) fluchten.

Das Abtriebselement (10) weist einen steuerbaren Drehantrieb (17) auf, der mit der Robotersteuerung (11) verbunden ist. Der Drehantrieb (17) besteht z.B. aus einem steuerbaren Elektromotor und einem ggf. zugeordneten Getriebe. Ferner kann dem Abtriebselement (10) eine schaltbare oder ggf. steuerbare Bremse (18) oder eine andere Einrichtung zum Blockieren und Festhalten des Abtriebselement (10) zugeordnet sein. Der Drehwinkel des Abtriebselements (10) kann begrenzt sein. Durch ein ggf. hohles Abtriebselement (10) und ggf. andere Roboterglieder (13,14,15) können eine oder mehrere Leitungen für Betriebsmittel, z.B. Leistungs- und Signalströme, Fluide etc. geführt sein und am Flansch nach außen treten.

Das Endglied (12), vorzugsweise dessen Abtriebselement (10), führt die Endbewegung zum Festdrehen des Drehteils (3) aus, wobei der Drehantrieb (17) und die Bremse (18) entsprechend von der Robotersteuerung (11) beaufschlagt werden. Die Bremse (23) der Dreheinrichtung (7) wird betätigt und die Bremse (18) gelöst. Die Drehantriebe (17,22) können in ihrer Charakteristik, insbesondere hinsichtlich Drehzahl und Moment, unterschiedlich, insbesondere gegensätzlich, ausgebildet sein. Z.B. kann der roboterseitige Drehantrieb (17) auf geringere Drehzahl und höheres Moment und der Drehantrieb (22) auf höhere Drehzahl und geringeres Moment ausgelegt sein.

Die vorerwähnte Sensorik (19) ist der Dreheinrichtung (7) und/oder dem Roboter (6), insbesondere dem Endglied (12), zugeordnet. Sie kann hierfür in unterschiedlicher Weise ausgebildet sein.

Sensorikteile in der Dreheinrichtung (7) können mit Sensorikteilen im Roboter (6), insbesondere im Endglied (12) abgeglichen werden (Redundanz).

Im gezeigten Ausführungsbeispiel ist dem Abtriebselement (10) ein Sensor (20) zugeordnet, der eine auftretende Belastung misst und der z.B. als Momentensensor oder sog. Gelenkmomentensensor ausgebildet ist. Ein anderer Sensor (21) ist ebenfalls dem Abtriebselement (10) zugeordnet, der dessen Drehbewegung bzw. dessen Position erfasst und der z.B. als Drehsensor ausgeführt ist. Die Sensoren (20,21) können aus Sicherheits- und Redundanzgründen mehrfach, z.B. doppelt, vorhanden sein. Sie sind ebenfalls mit der Robotersteuerung (11) verbunden.

Über den Belastungssensor (20) kann das Festdrehmoment und ggf. auch das Andrehmoment erfasst werden. Ein während der Andrehbewegung mit zunehmender Eindrehtiefe ansteigender Widerstand bzw. ein Widerstandsmoment der Dreheinrichtung (7) wird auf das Abtriebselement (10) übertragen und kann hier erfasst werden. Bei blockierter Dreheinrichtung (7) wird über das Abtriebselement (10) das Festdrehmoment direkt erfasst. Über einen Positions- oder Drehsensor (21) kann gleichzeitig in der vorerwähnten Weise erfasst werden, ob und ggf. welche Drehbewegung das Abtriebselement (10) ausführt. Hierbei wird unter einem Drehsensor ein Sensor verstanden, der rotatorische Größen, wie Drehwinkel, Drehgeschwindigkeit oder dgl. detektiert.

Die Sensorik (19) kann ferner einen Sensor (24) an der Dreheinrichtung (7) umfassen, der ggf. mehrfach vorhanden ist und unterschiedlich ausgebildet sein kann.

Beispielsweise ist der Sensor (24) als Positionssensor oder Drehsensor ausgeführt, der eine Dreh- und Abtriebsbewegung des Drehantriebs (22) und des Drehwerkzeugs (8) erfasst. Bei der Erfassung des Andrehmoments über den Belastungssensor (20) kann über den Sensor (24) das Vorliegen und die Art einer Drehbewegung der Dreheinrichtung (7) sensiert und zusammen mit dem Belastungssignal ausgewertet werden.

Der Sensor (24) kann eine gegenüber dem roboterseitigen Sensor (21) einfachere Bauart und geringere Präzision aufweisen. Der Sensor (24) kann auch entfallen.

Der Roboter (6) weist mehrere bewegliche und miteinander verbundene Glieder (12,13,14,15) auf. Die Glieder (12,13,14,15) sind vorzugsweise gelenkig und über drehende Achsen (I - VII) miteinander verbunden. Es ist ferner möglich, dass einzelne Glieder (13,14) mehrteilig und in sich beweglich sind. In der gezeigten Ausführungsform ist der Roboter (6) als Gelenkarmroboter ausgebildet und weist sieben angetriebene Achsen bzw. Bewegungsachsen (I - VII) auf. Die Achsen (I - VII) sind mit der Robotersteuerung (11) verbunden und können gesteuert und ggf. geregelt werden. Die abtreibende Drehachse (16) ist z.B. die Roboterachse (VII).

Der Roboter (6) ist programmierbar, wobei die Robotersteuerung (11) eine Recheneinheit, einen oder mehrere Speicher für Daten und Programme sowie Eingabe-und Ausgabeeinheiten aufweist. Die Dreheinrichtung (7), insbesondere ihr Drehantrieb (22), kann z.B. als gesteuerte Achse (VIII) in der Robotersteuerung (11) implementiert sein. Die Robotersteuerung (11) kann prozessrelevante Daten, z.B. Sensordaten, speichern und für eine Qualitätskontrolle und -sicherung protokollieren.

Die sog. Achsen (I - VII) weisen jeweils ein Drehlager bzw. ein Gelenk und einen hier zugeordneten und ggf. integrierten steuerbaren, ggf. regelbaren Drehantrieb auf. Auch können die Achsen (I - VI) eine steuer- oder schaltbare Bremse und eine ggf. redundante Sensorik haben, z.B. gemäß der vorbeschriebenen Art der Drehachse (16) bzw. Achse (VII) mit Sensoren (20,21) zum Erfassen von Belastungen, insbesondere Momenten und von Drehbewegungen und ggf. Drehpositionen.

Der Roboter (6) hat vorzugsweise drei oder mehr bewegliche Glieder. Im gezeigten Ausführungsbeispiel weist er ein mit dem Untergrund, z.B. einem Sockel, verbundenes Basisglied (15) und das vorerwähnte Endglied (12) sowie zwei Zwischenglieder (13,14) auf. Die Zwischenglieder (13,14) sind mehrteilig und in sich verdrehbar mittels Achsen (III) und (V) ausgebildet. Die Zahl der Zwischenglieder (13,14) kann alternativ kleiner oder größer sein. In weiterer Abwandlung können einzelne oder alle Zwischenglieder (13,14) in sich drehfest und ohne zusätzliche Achse ausgebildet sein.

Der Roboter (16) kann eine oder mehrere kraftgesteuerte oder kraftgeregelte Achsen (I - VII) bzw. kraftgesteuerte oder kraftgeregelte Achsantriebe zwischen den Gliedern (12,13,14,15) aufweisen. Der Roboter (6) kann dabei insbesondere eine oder mehrere nachgiebige Achsen (I - VII) bzw. nachgiebige Achsantriebe mit einer Nachgiebigkeitsregelung haben. Die Nachgiebigkeitsregelung kann eine reine Kraftregelung oder eine Kombination aus einer Positions- und einer Kraftregelung sein. Eine solche nachgiebige Achse kann in verschiedener Hinsicht für den Drehfügeprozess vorteilhaft genutzt werden. Einerseits kann der Roboter (6) die Dreheinrichtung (7) federnd ausweichfähig halten und führen, wodurch z.B. Crashs und insbesondere Unfälle mit Personen vermieden werden können. Die Eigenschaft kann auch zum manuellen Teachen und Programmieren benutzt werden. Über eine Belastungserfassung mit der Robotersensorik an den Achsen (I - VII) kann außerdem das Suchen und Finden der Fügeposition, insbesondere der Drehaufnahme (4), unterstützt und erleichtert werden. Auch Winkelfehler in der Relativstellung der Glieder (12,13,14,15) können detektiert und bedarfsweise korrigiert werden.

Eine oder mehrere nachgiebige Achsen sind außerdem zum Nachführen der Dreheinrichtung (7) beim Andrehen entsprechend des Vorschubs vorteilhaft. Der Roboter (6) kann außerdem eine definierte Andrückkraft beim Drehfügen in Axialrichtung der Drehfüge- oder Schraubachse aufbringen. Dies ist z.B. für Blechschrauben, selbstbohrende Schrauben oder dgl. von Vorteil. Für diesen Zweck ist es ebenfalls günstig, wenn der Roboter (6) eine oder mehrere Kraft- und ggf. positionsgeregelte Achsen (I - VII) aufweist.

Der Roboter (6) kann alternativ oder zusätzlich eine oder mehrere angetriebe Achsen (I - VII) ohne Nachgiebigkeit und z.B. mit einer exakten Positionssteuerung oder Positionsregelung aufweisen.

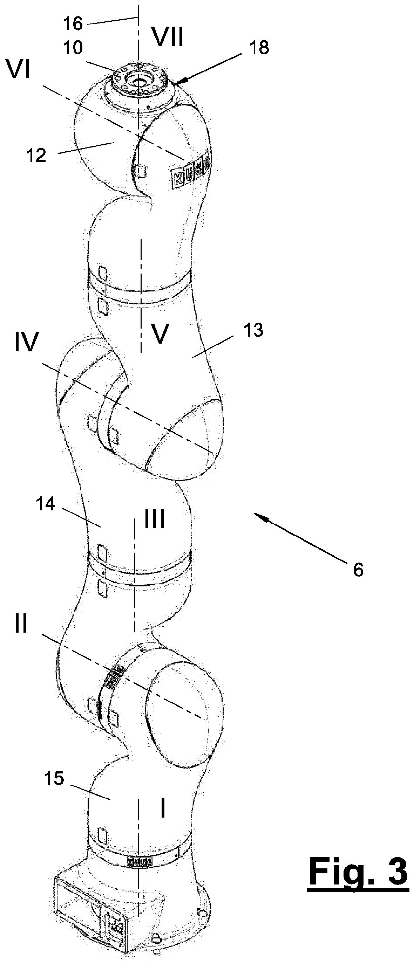

Die Figur 3 zeigt den Roboter (6) des Ausführungsbeispiels in einer Streckstellung und verdeutlicht die Ausbildung der Glieder (12,13,14,15) und der angetriebenen und steuerbaren bzw. regelbaren Achsen (I - VII). Hier sind auch die geteilten Ausbildungen der länglichen Zwischenglieder (13,14) mit der jeweils hier integrierten Drehachse (III) und (V) dargestellt. Die Versorgungsleitungen für Betriebsmittel sind im Inneren der Glieder (12,13,14,15) geführt, die hierfür z.B. Hohlwellen an den Gelenken bzw. Drehlagern aufweisen.

Der dargestellte Roboter (6) ist als Leichtbauroboter ausgebildet und besteht aus leichtgewichtigen Materialien, z.B. Leichtmetallen und Kunststoff. Er hat auch eine kleine Baugröße. Die in ihrer Konstruktion und Funktion vereinfachte Dreheinrichtung (7) hat ebenfalls ein geringes Gewicht. Die Arbeitsvorrichtung (1) ist dadurch insgesamt leichtgewichtig und kann ohne größeren Aufwand transportiert und von einem Einsatzort zum anderen verlegt werden. Das Gewicht der Arbeitsvorrichtung (1) kann unter 50 kg, insbesondere bei ca. 30 kg, liegen. Durch die Möglichkeit des manuellen Teachens kann die Arbeitsvorrichtung (1) schnell und einfach programmiert, in Betrieb genommen und an unterschiedliche Drehfüge- oder Schraubjobs angepasst werden.

Anstelle oder zusätzlich zu dem vorbeschriebenen Drehfügeprozess kann die Arbeitsvorrichtung (1) auch einen Drehlöseprozess ausführen, bei dem z.B. eine Schraube oder ein anderes Drehteil (3) an einer Drehaufnahme (4) gelöst und ggf. auch entfernt wird. Hierzu wird das Drehwerkzeug (8) in Eingriff mit dem fixierten Drehteil (3) gebracht und anschließend ein Losdreh- oder Losbrechmoment aufgebracht. Dieses wird vom Roboter (6), vorzugsweise mit dem Endglied (12), insbesondere mit dessen Abtriebselement (10), erzeugt. Über die vorbeschriebene Sensorik (19) kann ein Ende des Losdrehvorgangs detektiert werden, was z.B. über einen festgestellten Abfall des Losdrehmoments erfasst wird. Hierbei kann auch das Vorliegen einer Drehbewegung sensiert werden, um eine Plausibilitätskontrolle zu haben. Ferner kann mit einem anderen Teil der Sensorik (19), z.B. über Sensoren an den Roboterachsen (I - VII) festgestellt werden, ob das Drehwerkzeug (8) während der Drehung mit dem Drehteil (3) verbunden bleibt oder ob es sich löst und der Roboter (6) eine entsprechende Ausweichbewegung macht.

Sobald die Robotersteuerung (11) über die Sensorik (19) feststellt, dass der Losdreh- oder Losbrechvorgang beendet ist, kann der Drehantrieb des Roboters bzw. des Abtriebselements (10) abgeschaltet und die Dreheinrichtung (7) eingeschaltet werden, die dann nach Lösen ihrer Blockiereinrichtung (23) das Ausdrehen des Drehteils (3) bewirkt. Der Roboter (6) kann dieser Ausdrehbewegung in Axialrichtung mit einer entsprechenden Rückzugsbewegung folgen. Das Ende der Ausdrehbewegung kann ebenfalls in geeigneter Weise erfasst werden, z.B. durch Überwachung des Ausdrehmoments, welches bei Freikommen des Drehteils (3) aus der Drehaufnahme (4) abfällt. Der Roboter (6) kann mit der Halteeinrichtung (9) das freie Drehteil (3) abtransportieren und an geeigneter Stelle abgeben.

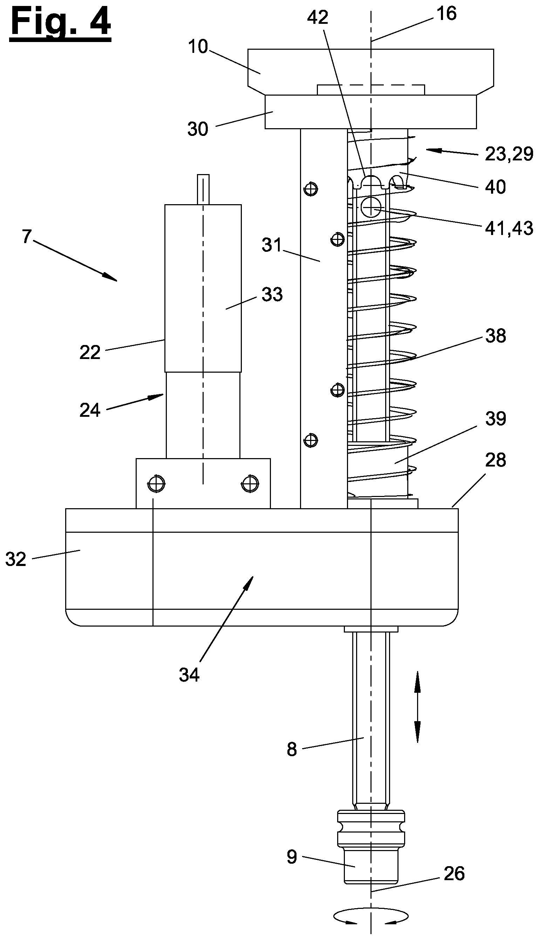

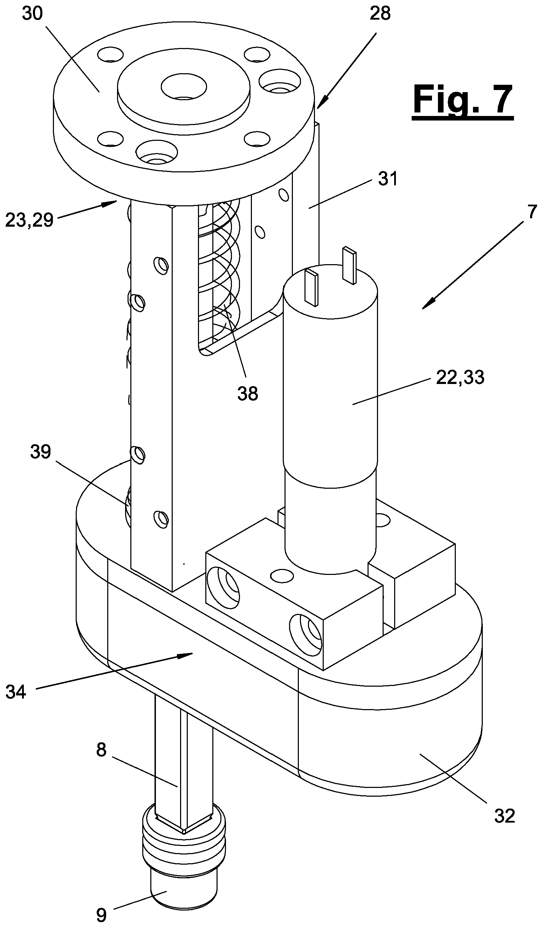

Figur 4 bis 7 zeigen eine Variante der Dreheinrichtung (7) in verschiedenen Ansichten. Diese Dreheinrichtung (7) eignet sich besonders für den Einsatz mit taktilen Robotern (6) der vorbeschriebenen Art, die ein oder mehrere kraftgesteuerte oder kraftgeregelte Roboterachsen (I - VII) bzw. Achsantriebe oder auch solche Achsen oder Achsantriebe mit einer Nachgiebigkeitsregelung haben.

Die gezeigte Dreheinrichtung (7) besitzt ein Gestell (28), welches einen flanschartigen Anschluss (30) zur Verbindung mit dem Abtriebselement (10) des Roboters (6) aufweist. Das Gestell (28) hat ferner einen Steg (31), der sich längs der Abtriebsachse (16) und der auch in dieser Variante fluchtenden Drehachse (26) des Drehwerkzeugs (8) erstreckt und der am einen Ende mit dem Anschluss (30) und an dem anderen Ende mit einem querliegenden Halteschenkel (32) verbunden ist, an dem seitlich versetzt ein Drehantrieb (22) angeordnet ist.

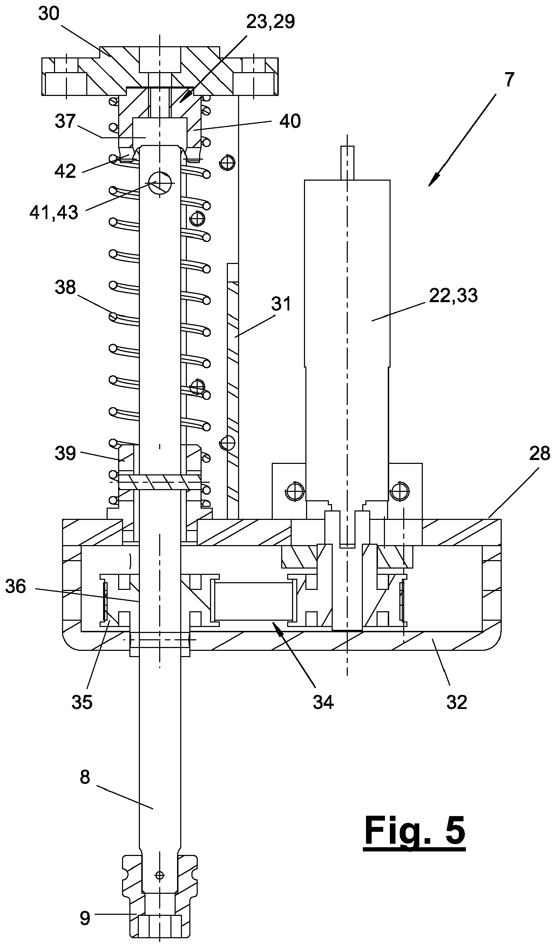

Der Drehantrieb (22) weist gemäß der Schnittdarstellung von Figur 5 einen Motor (33) und ein nachgeschaltetes Getriebe (34), z.B. ein Riemengetriebe, auf, dessen Abtriebselement (35), z.B. ein Ritzel, mit dem durchgesteckten Drehwerkzeug (8) drehschlüssig verbunden ist. Der Motor (33) ist vorzugsweise als Elektromotor, insbesondere als Gleichstrommotor, ausgebildet. Der vorerwähnte Sensor (24) kann dem Motor (33) zugeordnet sein und kann z.B. den Motorstrom erfassen. Hierüber lässt sich feststellen, ob und mit welcher Kraft bzw. welchem Moment der Motor (33) und damit auch das Drehwerkzeug (8) sich drehen.

Das Drehwerkzeug (8) ist in diesem Ausführungsbeispiel als Welle, vorzugsweise als Polygonwelle oder Vielkantwelle ausgebildet und weist am unteren Ende eine Halteeinrichtung (9) für ein Drehteil (nicht dargestellt), auf. Das Drehwerkzeug (8) ist in der Dreheinrichtung (7), insbesondere im Gestell (28), um seine Längs- und Abtriebsachse (26) drehbar und außerdem axial verschiebbar geführt. Die Führung kann durch eine Wellenführung (36) im Abtriebselement (35) und durch eine Wellenführung (37) am Anschluss (30) gebildet werden. Die Wellenführung (36) ist drehschlüssig und lässt Axialbewegungen zu. Die gestellseitige Wellenführung (37) erlaubt Drehungen und Axialverschiebungen des Drehwerkzeugs (8).

Das Drehwerkzeug (8) wird von einem Rückstellelement (38), z.B. einer auf dem oberen Wellenende aufgezogenen Feder, in Axialrichtung beaufschlagt. Am Drehwerkzeug (8) ist eine Federabstützung (39) angeordnet und vorzugsweise drehfest verbunden, an der sich das in Figur 5 untere Ende der Feder (38) abstützt. Das obere Federende ist am Anschluss (30) abgestützt und kann die Wellenführung (37) übergreifen. Das Rückstellelement (38) bzw. die Feder, insbesondere Druckfeder, wirkt in Axialrichtung (26) und drückt das Drehwerkzeug (8) vom Anschluss oder Flansch (30) weg. Der Halteschenkel (32) besitzt eine Durchgangsöffnung für das Drehwerkzeug (8), die an der Oberseite vergrößert sein kann und eine Aufnahme für die Federabstützung (39) bietet.

Die Dreheinrichtung (7) weist eine Kupplung (29) auf, die zwischen dem Abtriebselement (10) bzw. dem Endglied (12) und dem Drehwerkzeug (8) ausgebildet ist. Die Kupplung (29) kann vom Roboter (6) gesteuert bzw. betätigt werden. Sie kann insbesondere durch eine bevorzugt lineare Zustellbewegung des Roboters (6) geschlossen und geöffnet werden. Die Kupplung (29) dient dazu, in Schliessstellung zum Festdrehen oder Drehlösen eines Drehteils (3) entsprechende Drehbewegungen und Momente des Roboters (6) auf das Drehwerkzeug (8) zu übertragen. Die Kupplung (29) blockiert durch die direkte Antriebsverbindung zwischen Roboter (6) und Drehwerkzeug (8) die Drehbeweglichkeit der Dreheinrichtung (7) und bildet eine Ausführungsform der Blockiereinrichtung (23).

Die Kupplung (29) weist ein Kupplungselement (40) am Gestell (28) und ein damit in Eingriff tretendes Kupplungselement (41) am Drehwerkzeug (8) auf. In Schließstellung der Kupplung (29) übertragen die Kupplungselemente (40,41) Drehbewegungen und Momente des Roboters (6) auf das angekuppelte Drehwerkzeug (8) und stehen dafür vorzugsweise in einem formschlüssigen Eingriff.

Die Kupplung (29) kann in unterschiedlicher Weise konstruktiv ausgebildet sein. Es kann sich insbesondere um eine Klauenkupplung, Zahnscheibenkupplung oder dergleichen handeln. Im gezeigten Ausführungsbeispiel kommt eine Klauenkupplung zum Einsatz.

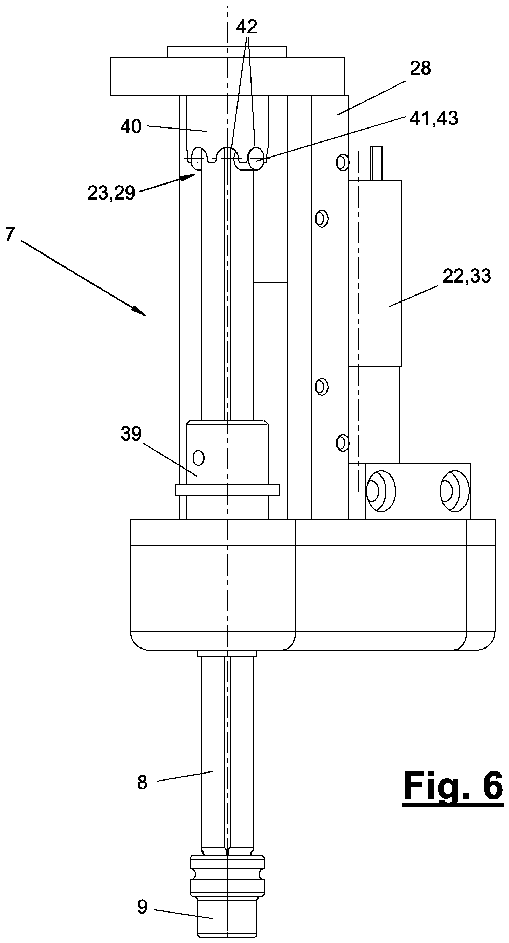

Das Kupplungselement (40) ist hülsenartig ausgebildet und weist gemäß Figur 4 und 6 an seinem unteren Hülsenrand mehrere axiale und bevorzugt gleichmäßig verteilte Rastnuten (42) im Hülsenmantel auf. Das Kupplungselement (40) hat eine rotationssymmetrische und insbesondere zylindrische Mantelform und ist koaxial mit der Abtriebsachse (16) des Roboters (6) und mit der Drehachse (26) des Drehwerkzeugs (8) angeordnet. Das Kupplungselement (40) kann zugleich die gestellseitige Wellenführung (37) bilden und nimmt das obere Ende des Drehwerkzeugs (8) im Hülseninnenraum auf, wo es je nach Kupplungsstellung mehr oder weniger tief eintaucht.

Das Kupplungselement (41) wird von einem oder mehreren, vorzugsweise zwei oder mehr seitlich, bzw. radial vom Drehwerkzeug (8) abstehenden Rastbolzen (43) gebildet, die zum Kupplungsschluss in die vorerwähnten Rastnuten (42) eintauchen und einen Form- und Drehschluss herstellen. Die Konturen der Rastbolzen (43) und Rastnuten (42) haben eine gerundete Form, wobei sie zumindest bereichsweise zur Herstellung von Spielfreiheit eine Verjüngung oder Keilform aufweisen. In Eingriffstellung kann die Kupplung (29) drehfest und spielfrei geschlossen werden. Einweiserschrägen an den Rändern der Rastnuten erleichtern den Eingriff. Die Rastnuten können (42) außerdem in größerer Zahl als die Rastbolzen (43) vorhanden sein. Die Zuordnung der Rastbolzen/Rastnuten (42,43) zu den Kupplungselementen (40,41) kann auch vertauscht werden.

Die Kupplung (29) wird durch eine axiale Verschiebebewegung des Drehwerkzeugs (8) relativ zum Gestell (28) geöffnet und geschlossen. Zum Schliessen der Kupplung (29) führt der Roboter (6) eine Zustellbewegung mit einer axialen Richtungskomponente längs der Achsen (16,26) aus. Hierbei wird das Rückstellelement (38) gespannt. Dieses öffnet andererseits durch seine Entspannung die Kupplung (29), wenn der Roboter (6) eine Rückzugbewegung ausführt.

Zum Drehfügen setzt der Roboter (6) ein an der Halteeinrichtung (9) aufgenommenes Drehteil (3) in eine Fügeöffnung, wobei nach einer Vorpositionierung zum Suchen und Auffinden der Fügeposition die robotereigene Sensorik (19) eingesetzt werden kann. Die Kupplung (29) kann dabei geöffnet sein. Zum Andrehen dreht der Drehantrieb (22) bei geöffneter Kupplung (29) das Drehwerkzeug (8) mit geringem Moment und hoher Drehzahl. Die Drehbewegung kann dabei über den Motorstrom oder auf andere geeignete Weise mit einem Sensor (24) detektiert und überwacht werden. Am Ende des Andrehvorgangs steigt das Widerstandsmoment (Kopfanlage), was über den Sensor (24) und/oder über die robotereigene Sensorik (19) mit einem Sensor (20) (Reaktionsmoment) detektiert werden kann. Der Roboter (6) führt dann die erwähnte axiale Zustellbewegung aus, wobei das Drehwerkzeug (8) an der Fügeposition drehfest gehalten und abgestützt ist und dementsprechend das Gestell (28) mit dem Kupplungselement (40) relativ zum Drehwerkzeug (8) verschoben wird.

Über die robotereigene Sensorik (19) kann ein korrektes Schliessen der Kupplung (29) anhand von Art und Größe der Zustellbewegung und auch der dabei auftretenden Belastungen detektiert werden. Durch eine Nachgiebigkeitsfunktion der Roboterachse (7) bzw. der Abtriebsachse (16) kann der Eingriff der Kupplungselemente (40,41) unter gegenseitiger Anpassung der Drehstellung begünstigt werden. Bedarfsweise kann der Roboter eine kleine Drehbewegung ausführen. Die in Schließstellung der Kupplung (29) bestehende Position des Roboters (6) und seiner Roboterachsen (1,7) kann detektiert werden. Der Roboter (6) führt dann die eigene Drehbewegung um die Abtriebsachse (16) zum Festdrehen des Drehteils (3) aus.

Falls der abtriebseitig verfügbare Drehwinkel des Abtriebselements (10) kleiner als der erforderliche Festdrehwinkel ist, kann der Roboter (6) ratschenartig arbeiten. Am Ende seines eigenen zulässigen Drehwinkels führt er eine begrenzte Rückzugbewegung unter Lösung der Kupplung (29) auf, dreht das Antriebselement (10) zurück, kuppelt erneut an und setzt die Festdrehbewegung fort. Hierbei kann von der robotereigenen Sensorik (19), insbesondere den Sensoren (20,21), die Drehbewegung und der gesamte, gegebenenfalls aufaddierte Drehwinkel bzw. die erreichte Drehposition und auch das Festdrehmoment erfasst werden. Wie beim ersten Ausführungsbeispiel kann das Festdrehen beendet werden, wenn ein vorgegebenes Festdrehmoment und/oder ein vorgegebener Drehwinkel bzw. eine Drehposition erreicht sind.

Mit der Dreheinrichtung (7) und dem Roboter (6) kann auch ein Drehlöseprozeß ausgeführt werden, in dem der Roboter (6) das Drehwerkzeug (8) mit dem Haltemittel (9) an ein Drehteil (3) zustellt, ggf. die Position sucht und den Eingriff herstellt. Durch eine Zustellbewegung des Roboters (6) wird auch die Kupplung (29) geschlossen, so dass anschließend das Losdrehmoment vom Roboter (6) um die Abtriebsachse (16) am Drehwerkzeug (8) aufgebracht werden kann. Falls zum Losdrehen ein größerer Drehwinkel erforderlich ist, kann die vorbeschriebene Ratschenfunktion eingesetzt werden. Das Ende des Losdrehens kann von der robotereigenen Sensorik (19) detektiert werden. Anschließend kann zum Ausdrehen des Drehteils (13) die Kupplung (29) durch eine Rückzugbewegung des Roboters (6) geöffnet und der Drehantrieb (22) betätigt werden. Der Drehantrieb (22), insbesondere sein Motor (33), und ein evtl. vorhandener Sensor (24) sind mit der Robotersteuerung (11) verbunden und werden auch von dieser gegebenenfalls gesteuert oder geregelt.

Abwandlungen der gezeigten und beschriebenen Ausführungsformen sind in unterschiedlicher Weise möglich. Zum einen kann der Roboter (6) in der Zahl und Ausbildung seiner Glieder (12,13,14,15) und auch seiner angetriebenen Achsen (I - VII) variieren. Er kann eine beliebige Zahl und Kombination von rotatorischen und/oder translatorischen Achsen aufweisen, wobei deren Achsantriebe und Lagerungen entsprechend unterschiedlich ausgebildet sind.

In der gezeigten Ausführungsform hat das Endglied (12) das bewegliche Abtriebselement (10) mit der angetriebenen und gesteuerten oder geregelten siebten Achse (VII). In einer anderen Ausführungsform kann das Endglied (12) einen drehfesten Anschluss für die Dreheinrichtung (7) aufweisen, wobei das Endglied (12) seinerseits gegenüber einem vorgeschalteten anderen Glied gedreht wird, wobei diese Drehachse die gleiche Ausbildung und Funktion wie die Achse (VII) des Abtriebselements (10) aufweisen kann. Die abtreibende Drehachse des Roboters (6) kann somit eine andere Roboterachse als die Achse (VII) bzw. die Drehachse (16) sein.

Ferner kann der Roboter (6) eine andere und konventionelle Ausbildung und Gestaltung seiner Glieder haben. Er kann auch ein höheres Gewicht besitzen. Variabel ist zudem die Gestaltung und Ausbildung der Sensorik (19). An der Dreheinrichtung (7) kann ebenfalls ein Belastungen, insbesondere Drehmomente, erfassender Sensor angeordnet und ggf. mit einer gemeinsamen Steuerung (11) verbunden sein. Auf Sensoren zur Erfassung einer Drehung, insbesondere einer Drehbewegung und/oder einer Drehposition, kann alternativ verzichtet werden, wobei ggf. wegen eines erforderlichen Anziehmoments nur Belastungen und insbesondere Momente erfasst werden. Außerdem sind anderer Ausbildungen und Anordnungen der Sensoren (20,21,24) möglich, um die genannten Funktionen der Sensorik (19) zu erfüllen. In der gezeigten Ausführungsform ist an der Dreheinrichtung (7) ein einzelnes Drehwerkzeug (8) angeordnet. In Variation hierzu kann die Dreheinrichtung (7) ein Mehrfach-Drehwerkzeug oder ein Werkzeugmagazin, z.B. einen Revolver, mit mehreren Drehwerkzeugen (8) tragen.

### BEZUGSZEICHENLISTE

- 1: Arbeitsvorrichtung, Schraubvorrichtung
- 2: Werkstück
- 3: Drehteil, Schraubteil, Schraube
- 4: Drehaufnahme, Schraubaufnahme, Gewindebohrung
- 5: Gewinde
- 6: Roboter, Leichtbauroboter
- 7: Dreheinrichtung, Andreheinrichtung
- 8: Drehwerkzeug, Schraubwerkzeug, Welle, Polygonwelle
- 9: Halteeinrichtung für Drehteil, Greifer
- 10: Abtriebselement, Abtriebsflansch, Drehflansch
- 11: Steuerung, Robotersteuerung
- 12: Glied, Endglied, Hand
- 13: Glied, Zwischenglied
- 14: Glied, Zwischenglied
- 15: Glied, Basisglied
- 16: Drehachse, Abtriebsachse
- 17: Antrieb, Drehantrieb
- 18: Bremse
- 19: Sensorik
- 20: Sensor, Belastungssensor, Momentensensor
- 21: Sensor, Positionssensor, Drehsensor
- 22: Drehantrieb
- 23: Blockiereinrichtung, Bremse
- 24: Sensor, Positionssensor
- 25: Werkzeugaufnahme
- 26: Drehachse
- 27: Bereitstellung
- 28: Gestell
- 29: Kupplung
- 30: Anschluss, Flansch
- 31: Steg
- 32: Halteschenkel
- 33: Motor, Gleichstrommotor
- 34: Getriebe
- 35: Abtriebselement, Ritzel
- 36: Wellenführung im Abtriebselement
- 37: Wellenführung im Gestell
- 38: Rückstellelement, Feder
- 39: Federabstützung
- 40: Kupplungselement gestellseitig, Krone
- 41: Kupplungselement wellenseitig, Bolzen
- 42: Rastnut
- 43: Rastbolzen

- I - VII: Achse von Roboter

## Patentansprüche

1. Arbeitsvorrichtung, insbesondere Schraubvorrichtung, zum Drehfügen und/oder Drehlösen von Drehteilen (3), insbesondere Schrauben oder Muttern, mit einem mehrgliedrigen (12,13,14,15) Roboter (6) mit einer abtreibenden Drehachse, wobei der Roboter (6) an seinem Endglied (12) eine eigenständig angetriebene Dreheinrichtung (7) mit einem Drehwerkzeug (8) trägt, **dadurch gekennzeichnet, dass** die Dreheinrichtung (7) zum schnellen Andrehen oder Ausdrehen eines Drehteils (3) vorgesehen und ausgebildet ist, wobei der Roboter (6), insbesondere sein Endglied (12), zum Festdrehen oder Losdrehen des Drehteils (3) vorgesehen und ausgebildet ist.

2. Arbeitsvorrichtung nach Anspruch 1, **dadurch gekennzeichnet, dass** der Roboter (6), insbesondere sein Endglied (12), zum Festdrehen oder Losdrehen des Drehteils (3) eine eigene Drehbewegung mit dem Drehwerkzeug (8) ausführt.

3. Arbeitsvorrichtung nach Anspruch 1 oder 2, **dadurch gekennzeichnet, dass** das Endglied (12) ein um eine Abtriebsachse (16) drehbares Abtriebselement (10) mit einem steuerbaren Drehantrieb (17) aufweist, wobei die Dreheinrichtung (7) an dem Abtriebselement (10) angeordnet ist.

4. Arbeitsvorrichtung nach Anspruch 1, 2 oder 3, **dadurch gekennzeichnet, dass** die Dreheinrichtung (7) einen steuerbaren Drehantrieb (22) und eine Drehachse (26) aufweist.

5. Arbeitsvorrichtung nach einem der vorhergehenden Ansprüche, **dadurch gekennzeichnet, dass** die Drehantriebe (17,22) des Roboters (6) und der Dreheinrichtung (7) in ihrer Charakteristik, insbesondere hinsichtlich Drehzahl und Moment, unterschiedlich ausgebildet sind, wobei der roboterseitige Drehantrieb (17) auf geringere Drehzahl und höheres Moment und der Drehantrieb (22) der Dreheinrichtung (7) auf höhere Drehzahl und geringeres Moment ausgelegt ist.

6. Arbeitsvorrichtung nach einem der vorhergehenden Ansprüche, **dadurch gekennzeichnet, dass** die Drehachse (26) der Dreheinrichtung (7) und die Abtriebsachse (16) des Abtriebselements (10) parallel ausgerichtet sind, insbesondere fluchten.

7. Arbeitsvorrichtung nach einem der vorhergehenden Ansprüche, **dadurch gekennzeichnet, dass** die Dreheinrichtung (7) in ihrer Drehbeweglichkeit blockierbar ist, wobei die Drehbewegung und ein Festdreh- oder Losdrehmoment des Roboters (6) zum Festdrehen oder Losdrehen auf das Drehteil (3) übertragen werden.

8. Arbeitsvorrichtung nach einem der vorhergehenden Ansprüche, **dadurch gekennzeichnet, dass** die Dreheinrichtung (7) eine steuerbare Blockiereinrichtung (23) für ihre Drehbeweglichkeit aufweist.

9. Arbeitsvorrichtung nach einem der vorhergehenden Ansprüche, **dadurch gekennzeichnet, dass** die Arbeitsvorrichtung (1) eine Sensorik (19) aufweist, die ein Ende eines Prozessschritts, insbesondere eines Andreh- oder Losdrehvorgangs detektiert.

10. Arbeitsvorrichtung nach einem der vorhergehenden Ansprüche, **dadurch gekennzeichnet, dass** die Arbeitsvorrichtung (1) eine Sensorik (19) aufweist, die eine Belastung, insbesondere ein Moment und/oder eine Drehbewegung und/oder Drehposition erfasst.

11. Arbeitsvorrichtung nach einem der vorhergehenden Ansprüche, **dadurch gekennzeichnet, dass** die Sensorik (19) im Roboter (6) und ggf. zum Teil in der Dreheinrichtung (7) angeordnet ist.

12. Arbeitsvorrichtung nach einem der vorhergehenden Ansprüche, **dadurch gekennzeichnet, dass** der Roboter (6) eine oder mehrere kraftgesteuerte oder kraftgeregelte Achsen (I - VII) aufweist.

13. Arbeitsvorrichtung nach einem der vorhergehenden Ansprüche, **dadurch gekennzeichnet, dass** der Roboter (6) mindestens eine nachgiebige Achse (I - VII) mit einer Nachgiebigkeitsregelung, insbesondere einer reinen Kraftregelung oder einer Kombination aus Positions- und Kraftregelung, aufweist, *wobei die Dreheinrichtung (7) mittels der nachgiebigen Achse (n) (I - VII) federnd ausweichfähig gehalten und geführt ist.*

14. Verfahren zum Drehfügen und/oder Drehlösen von Drehteilen (3), insbesondere Schrauben oder Muttern, mit einer Arbeitsvorrichtung (1), insbesondere einer Schraubvorrichtung, wobei die Arbeitsvorrichtung einen mehrgliedrigen (12,13,14,15) Roboter (6) mit einer abtreibenden Drehachse aufweiset, der an seinem Endglied (12) eine eigenständig angetriebene Dreheinrichtung (7) mit einem Drehwerkzeug (8) trägt, handhabt und positioniert, **dadurch gekennzeichnet, dass** die Dreheinrichtung (7) zum schnellen Andrehen oder Ausdrehen eines Drehteils (3) benutzt wird, wobei der Roboter (6), insbesondere sein Endglied (12), das Drehteil (3) festdreht oder losdreht.

15. Verfahren nach Anspruch 14, **dadurch gekennzeichnet, dass** der Roboter (6), insbesondere sein Endglied (12), zum Festdrehen oder Losdrehen des Drehteils (3) eine eigene Drehbewegung mit dem Drehwerkzeug (8) durchführt.

## Claims

1. Working appliance, in particular screwing appliance, for rotationally joining and/or rotationally detaching rotary parts (3), in particular screws or nuts, having a multi-limb (12, 13, 14, 15) robot (6) with a drive-output rotation axis, wherein the robot (6) bears on its end limb (12) an independently driven rotary device (7) having a rotary tool (8), **characterized in that** the rotary device (7) is provided and configured to rapidly screw in or unscrew a rotary part (3), wherein the robot (6), in particular its end limb (12), is provided and configured to tighten or loosen the rotary part (3).

2. Working appliance according to Claim 1, **characterized in that** the robot (6), in particular its end limb (12), executes a separate rotary movement with the rotary tool (8) in order to tighten or loosen the rotary part (3).

3. Working appliance according to Claim 1 or 2, **characterized in that** the end limb (12) has a drive-output element (10) that is rotatable about a drive-output axis (16) and has a controllable rotary drive (17), wherein the rotary device (7) is arranged on the drive-output element (10).

4. Working appliance according to Claim 1, 2 or 3, **characterized in that** the rotary device (7) has a controllable rotary drive (22) and a rotation axis (26).

5. Working appliance according to one of the preceding claims, **characterized in that** the rotary drives (17, 22) of the robot (6) and of the rotary device (7) are configured differently in terms of their characteristics, in particular in terms of speed and torque, wherein the robot-side rotary drive (17) is designed for a lower speed and higher torque and the rotary drive (22) of the rotary device (7) is designed for a higher speed and lower torque.

6. Working appliance according to one of the preceding claims, **characterized in that** the rotation axis (26) of the rotary device (7) and the drive-output axis (16) of the drive-output element (10) are oriented parallel to one another, and in particular are aligned.

7. Working appliance according to one of the preceding claims, **characterized in that** the rotatability of the rotary device (7) is able to be blocked, wherein the rotary movement and a tightening or loosening torque of the robot (6) for tightening or loosening are transmitted to the rotary part (3).

8. Working appliance according to one of the preceding claims, **characterized in that** the rotary device (7) has a controllable blocking device (23) for the rotatability thereof.

9. Working appliance according to one of the preceding claims, **characterized in that** the working appliance (1) has a sensor system (19) which detects an end of a process step, in particular of a screwing-in or unscrewing operation.

10. Working appliance according to one of the preceding claims, **characterized in that** the working appliance (1) has a sensor system (19) which senses a load, in particular a torque and/or rotary movement and/or rotary position.

11. Working appliance according to one of the preceding claims, **characterized in that** the sensor system (19) is arranged in the robot (6) and optionally partly in the rotary device (7).

12. Working appliance according to one of the preceding claims, **characterized in that** the robot (6) has one or more force-controlled or force-regulated axes (I-VII).

13. Working appliance according to one of the preceding claims, **characterized in that** the robot (6) has at least one flexible axis (I-VII) with flexibility regulation, in particular pure force regulation or a combination of position regulation and force regulation, wherein the rotary device (7) is retained and guided in a resiliently yielding manner by means of the flexible axis/axes (I-VII).

14. Method for rotationally joining and/or rotationally detaching rotary parts (3), in particular screws or nuts, with a working appliance (1), in particular a screwing appliance, wherein the working appliance has a multi-limb (12, 13, 14, 15) robot (6) with a drive-output rotation axis, said robot (6) bearing, handling and positioning on its end limb (12) an independently driven rotary device (7) having a rotary tool (8), **characterized in that** the rotary device (7) is used to rapidly screw in or unscrew a rotary part (3), wherein the robot (6), in particular its end limb (12), tightens or loosens the rotary part (3).

15. Method according to Claim 14, **characterized in that** the robot (6), in particular its end limb (12), executes a separate rotary movement with the rotary tool (8) in order to tighten or loosen the rotary part (3).

## Revendications

1. Dispositif de travail, notamment dispositif de vissage, pour assembler en tournant et/ou desserrer en tournant les pièces tournantes (3), notamment des vis ou des écrous, avec un robot (6) à plusieurs maillons (12, 13, 14, 15) avec un axe de rotation effectuant un entraînement en sortie, le robot (6) supportant au niveau de son maillon d'extrémité (12) un dispositif tournant (7) entraîné de façon autonome avec un outil tournant (8), **caractérisé en ce que** le dispositif tournant (7) est prévu et réalisé pour tourner à un rythme rapide dans le sens du vissage ou du dévissage une pièce tournante (3), le robot (6), notamment son maillon d'extrémité (12), étant prévu et réalisé pour faire tourner pour serrage ou desserrage la pièce tournante (3).

2. Dispositif de travail selon la revendication 1, **caractérisé en ce que** le robot (6), notamment son maillon d'extrémité (12), effectue, pour serrer ou desserrer la pièce tournante (3), un mouvement de rotation propre avec l'outil tournant (8).

3. Dispositif de travail selon la revendication 1 ou 2, **caractérisé en ce que** le maillon d'extrémité (12) comporte un élément d'entraînement en sortie (10) pouvant tourner autour d'un axe d'entraînement en sortie (16) avec un entraînement en entrée tournant (17) commandable, le dispositif tournant (7) étant disposé au niveau de l'élément d'entraînement en sortie (10).

4. Dispositif de travail selon la revendication 1, 2 ou 3, **caractérisé en ce que** le dispositif tournant (7) comporte un entraînement en entrée tournant (22) commandable et un axe de rotation (26).

5. Dispositif de travail selon l'une quelconque des revendications précédentes, **caractérisé en ce que** les entraînements en entrée tournants (17, 22) du robot (6) et du dispositif tournant (7) sont réalisés avec des caractéristiques différentes, notamment en matière de vitesses de rotation et de couples, l'entraînement en entrée tournant (17) placé du côté du robot étant conçu avec une vitesse de rotation plus réduite et un couple supérieur et l'entraînement en entrée tournant (22) du dispositif tournant (7) étant conçu avec une vitesse de rotation supérieure et un couple plus réduit.

6. Dispositif de travail selon l'une quelconque des revendications précédentes, **caractérisé en ce que** l'axe de rotation (26) du dispositif tournant (7) et l'axe d'entraînement en sortie (16) de l'élément d'entraînement en sortie (10) sont orientés parallèlement, notamment alignés.

7. Dispositif de travail selon l'une quelconque des revendications précédentes, **caractérisé en ce que** le dispositif tournant (7) peut être bloqué dans sa mobilité en rotation, le mouvement de rotation et un couple de rotation de serrage ou de desserrage du robot (6) étant transmis à la pièce tournante (3) pour serrage ou desserrage.

8. Dispositif de travail selon l'une quelconque des revendications précédentes, **caractérisé en ce que** le dispositif tournant (7) comporte un dispositif de blocage (23) commandable pour sa mobilité en rotation.

9. Dispositif de travail selon l'une quelconque des revendications précédentes, **caractérisé en ce que** le dispositif de travail (1) comporte un système de détection (19) détectant une fin d'une étape de processus, notamment d'un processus de vissage ou dévissage.

10. Dispositif de travail selon l'une quelconque des revendications précédentes, **caractérisé en ce que** le dispositif de travail (1) comporte un système de détection (19) détectant une sollicitation, notamment un couple et/ou un mouvement de rotation et/ou une position de rotation.

11. Dispositif de travail selon l'une quelconque des revendications précédentes, **caractérisé en ce que** le système de détection (19) est disposé dans le robot (6) et le cas échéant en partie dans le dispositif tournant (7).

12. Dispositif de travail selon l'une quelconque des revendications précédentes, **caractérisé en ce que** le robot (6) comporte un ou plusieurs axes (I - VII) à commande de force ou à réglage de force.

13. Dispositif de travail selon l'une quelconque des revendications précédentes, **caractérisé en ce que** le robot (6) comporte au moins un axe (I - VII) élastique avec un réglage d'élasticité, notamment un réglage de force uniquement ou une combinaison de réglage de position et de force, *le dispositif tournant (7) étant maintenu et guidé de façon à pouvoir s'écarter de façon élastique à l'aide de l'axe (n) élastique (I - VII).*

14. Procédé pour assembler en tournant et/ou desserrer en tournant les pièces tournantes (3), notamment des vis ou des écrous, avec un dispositif de travail (1), notamment un dispositif de vissage, le dispositif de travail comportant un robot (6) à plusieurs maillons (12, 13, 14, 15) avec un axe de rotation effectuant un entraînement en sortie supportant, manipulant et positionnant, au niveau de son maillon d'extrémité (12), un dispositif tournant (7) entraîné de façon autonome avec un outil tournant (8), **caractérisé en ce que** le dispositif tournant (7) est utilisé pour tourner à un rythme rapide dans le sens du vissage ou du dévissage une pièce tournante (3), le robot (6), notamment son maillon d'extrémité (12), serrant ou desserrant la pièce tournante (3).

15. Procédé selon la revendication 14, **caractérisé en ce que** le robot (6), notamment son maillon d'extrémité (12), effectue, pour serrer ou desserrer la pièce tournante (3), un mouvement de rotation propre à l'aide de l'outil tournant (8).
